# EUROPEAN PATENT SPECIFICATION

(11) **EP 0 426 389 B1**
(45) Date of publication and mention of the grant of the patent: **07.12.1994**
(21) Application number: 90311753.9
(22) Date of filing: 26.10.1990
(51) Int. Cl.: B60C 5/01

(54) **A pneumatic tyre**
Luftreifen
Bandage pneumatique

(30) Priority: 01.11.1989 JP 287053/89; 22.11.1989 JP 303545/89
(43) Date of publication of application: 08.05.1991
(73) Proprietor: SUMITOMO RUBBER INDUSTRIES LIMITED, Kobe-shi Hyogo-ken (JP)
(72) Inventor: Nakasaki, Eiji, Kakogawa-shi, Hyogo-ken (JP)
(74) Representative: Stewart, Charles Geoffrey

(56) References cited:
- EP-A- 0 023 848
- DE-A- 2 034 746
- GB-A- 1 159 677
- US-A- 4 014 969
- PATENT ABSTRACTS OF JAPAN vol. 8, no. 136 (M-304)(1573) 23 June 1984; & JP-A-59 34904

## Description

The present invention relates to an injection-moulded pneumatic tyre having a tread rubber on a tyre base body made of a high polymer material, in which the uniformity is improved so as to reduce vertical and lateral vibration, resulting in improved ride feel and steering stability, and prolonged tyre life.

Recently, injection-moulded pneumatic tyres in which beads parts, sidewall parts and a tread are made using a high polymer have been used as a low cost tyre for relatively low speed vehicles such as agricultural vehicles, motocross motorcycles, all-wheel drive vehicles or the like. However even in such kinds of tyres the tread part is provided with a reinforcement layer consisting of reinforcing cords and the tread rubber has tread grooves formed in its surface.

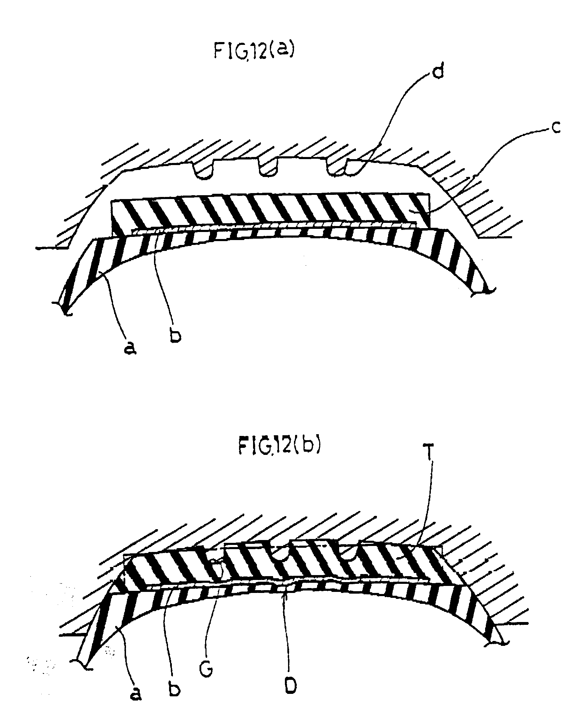

Heretofore such tread rubber T, as shown in Figures 12(a) and 12(b), is formed by vulcanisation in a metal mould, after winding a belt shaped raw rubber strip or sheet (c) on the outer side of a tyre base body (a) on top of a reinforcement layer (b). The tread grooves (G) are formed by pushing the pattern convexities (d) of a metal mould into the raw rubber sheet (c) during vulcanisation.

However, in a conventional tyre in which tread grooves are formed in an unvulcanised raw rubber sheet (c) during vulcanisation in a metal mould, the tyre base body (a) is apt to suffer deformation due to the pressure of the pattern convexities (d), resulting in a lack of circularity and a reduction in the precision of the tyre shape. In particular, wave-like deformation (D) is induced in the reinforcement layer (b) and the tyre base body (a) under the tread grooves. Thus, the rubber thickness under said tread grooves, that is, the sub-tread gauge becomes uneven and causes a deterioration in the uniformity of the tyre. As a result, the radial run-out of the tyre (RRO), the radial force variation (RFV), the lateral run-out (LRO) and the lateral force variation (LFV) are increased so as to cause lateral and vertical vibration in use of the tyre thereby reducing the comfort and steering stability. Furthermore, cracking, separation or the like is promoted in the tread rubber by this uneven tread gauge so that the tyre durability is reduced and the tyre life shortened.

In the prior tyres, the reinforcement layer was conventionally formed by a fabric band or strip which has a ply of steel cords. A large number of cords was required to obtain the necessary strength. As a result the excessive rigidity causes a deterioration in comfort and the large difference in the rigidity of the reinforcement layer and the tread rubber promotes separation.

A tyre according to the preamble of claim 1 is known for example from patent publication EP-A-0023848.

It is an object of the present invention to provide a tyre which has improved uniformity to give improved ride feeling and steering stability together with increased tyre life.

According to the present invention a pneumatic tyre formed in a metal vulcanising mould by vulcanising a raw cover tyre which comprises a toroidal tyre base body injection-formed of high polymer material and having a pair of bead parts each with a bead core, sidewall parts each extending outwardly in the radial direction of the tyre from said bead parts and a tread bottom part disposed between outer ends of said sidewall parts for forming a tread part of a tyre, an unvulcanised cushion rubber layer having a JIS A hardness of 20 to 40 degrees arranged on said tread bottom part, a reinforcement layer of reinforcing cords arranged on said cushion rubber layer, and a tread rubber made of vulcanised or semi-vulcanised rubber characterised in that the tyre base body comprises a pair of semi-annular tyre pieces having one bead part in which the bead core is buried, one sidewall part contiguous to the bead part, and an extending piece contiguous to the sidewall part for forming the tread bottom part by mutually joining and the trade rubber has tread grooves on its outer surface and is arranged on said reinforcement layer.

Preferably the reinforcement layer comprises a single or a plurality of reinforcing cords spirally and continuously wound around the tyre in the circumferential direction. Alternatively the reinforcement layer may be a cut edge reinforcement ply and a folded edge reinforcement ply. In this case the cut edge ply is preferably of steel cord fibres and the folded edge reinforcement ply is of organic material fibres. In another arrangement the reinforcement layer may be one or more cut edge reinforcement plies and a band layer of nylon cord spirally and continuously wound around the tyre in the circumferential direction over the reinforcement ply layer.

Because an unvulcanised cushion rubber layer and a reinforcement layer are positioned between the high polymer material base body and the semi-vulcanised or vulcanised tread rubber the raw cover tyre can be intimately united as a single body during vulcanisation in the metal mould.

Since the tread grooves are pre-formed on the outer surface of the tread there is no uneven pressure during vulcanisation and the tread gauge and the tyre shape are maintained so that the uniformity of the finished tyre is improved as is the resultant tyre durability.

When a spirally wound reinforcement layer is used the cut edge reinforcement layer is preferably steel and the folded edge is of organic fibre cord. Alternatively a band layer of nylon cord is used. The reinforcement layers thus provide the necessary hoop effect with reduced cord density so that tread rigidity is lessened to give good ride comfort and also tread separation is prevented.

Embodiments of the present invention will now be described by way of example only, referring to the attached diagrammatic drawings, in which:
Figure 1 is a sectional view of a tyre;

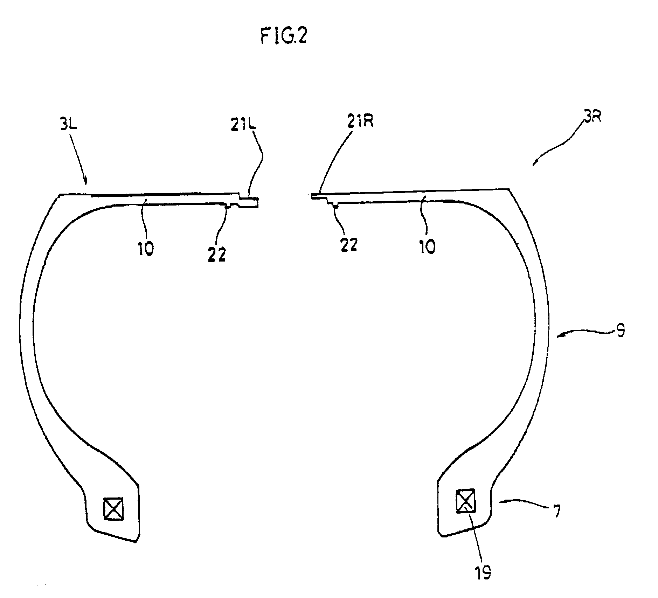

Figure 2 is a sectional view showing the semi-annular tyre pieces;
Figure 3 is a sectional view showing a metal mould used for injection of semi-annular tyre pieces;
Figure 4 is a sectional view showing the bead core;
Figure 5 is a sectional view showing a tyre base body;
Figures 6 and 7 are magnified sectional views showing the junction process for the tyre pieces;

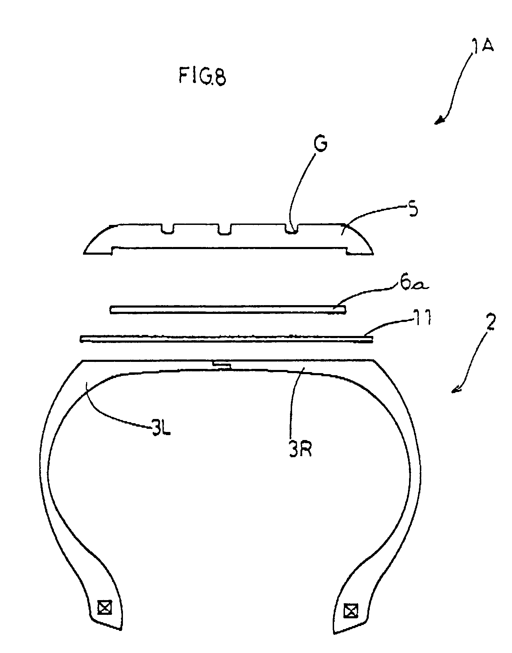

Figure 8 is a separated sectional view showing each component of a raw cover tyre
Figure 9 is a sectional view showing a forming state in a metal mould;
Figures 10 and 11 are other embodiments of the invention;
Figures 12(a),(b) are sectional views explaining the prior art.

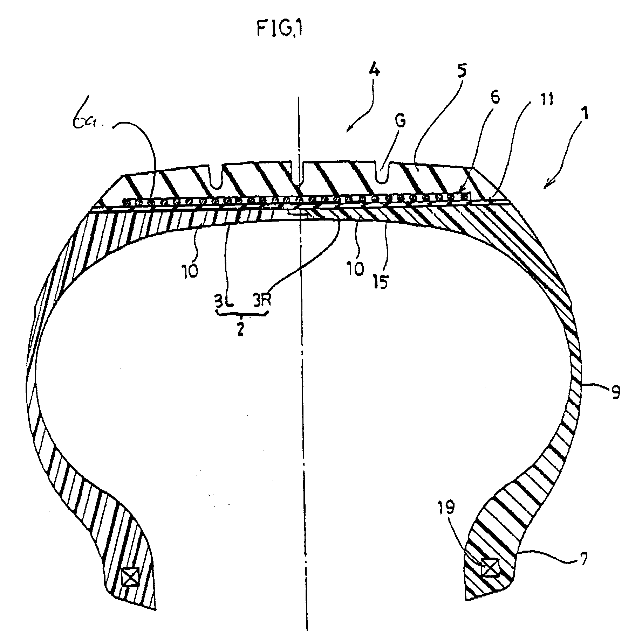

Figure 1 shows one embodiment of a pneumatic tyre according to the present invention.

In Figure 1, a pneumatic tyre 1 is made by unifying by vulcanisation in a metal mould a raw cover tyre in which a reinforcement layer 6 and a tread rubber 5 are superimposed on a tyre base body 2, and a cushion rubber layer 11 is inserted between the tyre base body 2 and the reinforcement layer 6. The tyre base body 2 has a thin tread bottom part 15 for forming a tread part 4, which is disposed between the outer ends of sidewall parts 9 each extending radially outwardly from a bead part 7 in which is embedded a bead core 19.

The tyre body 2 consists of a pair of semi-annular tyre pieces 3L,3R. The tyre pieces 3L,3R are shaped in a half ring, as if dividing a conventional pneumatic tyre into right and left parts on the tyre's equatorial plane. Each one of the tyre pieces 3L,3R comprises one bead part 7, a sidewall part 9 contiguous and extending outwardly in the radial direction from the bead part 7, and an extending piece 10 for forming a tread bottom 15 of a tyre contiguous to the sidewall part 9. In each bead 7, a bead core 19 made of inelastic material such as steel wire is provided as in a conventional tyre.

The sectional shape of the tyre base body 2 is not limited to the low aspect tyre for passenger cars as shown in Figure 1, and may be of other sizes depending on the required size, type of vehicle, application or other factors.

The tyre pieces 3L,3R together form an integral tyre base body 2 by the front ends of the extending pieces 10 being overlapped and joined at the tyre equator, to provide a continuous tread bottom 15 corresponding to the carcass crown of a conventional tyre.

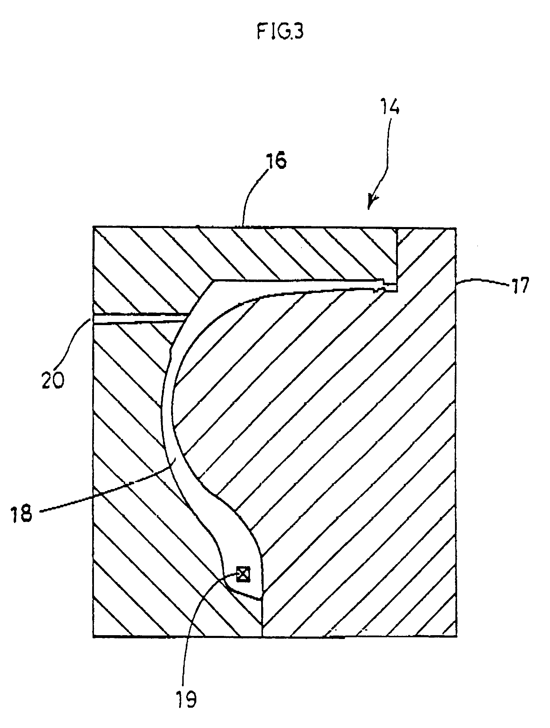

Each of the tyre pieces 3L,3R is moulded by the injection of a high polymer material from an inlet 20 into a cavity 18 which is provided between an outer mould 16 and a movable inner mould 17 of a mould 14, as shown in Figure 3. The bead core 19 is supported in the cavity 18.

For the high polymer material of the tyre pieces 3L,3R, liquid polyurethane, polyisoprene, polyester elastomer or the like may be used. Preferably polyester elastomer is used because it is excellent in hardness, tensile strength and other properties after hardening.

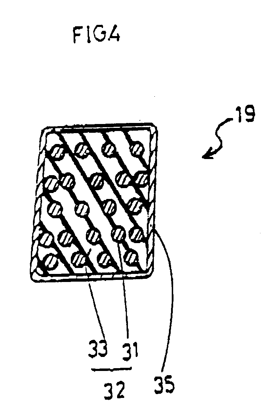

The bead core 19 is formed by vulcanising the bead core base body 32, composed of turns or bead cords 31 provided with coating rubber 33, as shown in Figure 4. An adhesive 35 is applied on almost the entire outer surface of the bead core 19. A suitable adhesive is any material capable of dissolving the polyester elastomer used for the tyre pieces 3L,3R so as to bound the rubber surface layer of the bead core 19 and the elastomer. For example, Kemlock 210 (Trade Mark) of Road Far East Incorporated is a preferred adhesive.

The tyre pieces 3L,3R are provided with co-engaging junction pieces 21L,21R to act as engagement parts at the outer edges of the extending pieces 10 as shown in Figures, 2, 6 and 7, and a protrusion 22 extending in the tyre circumferential direction is disposed inside the front end of each extending piece 10.

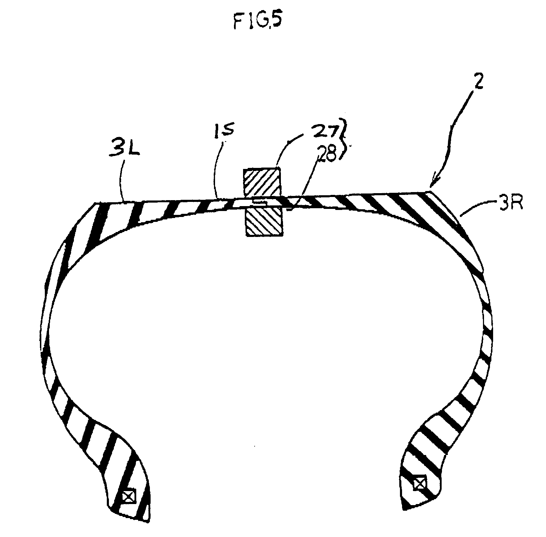

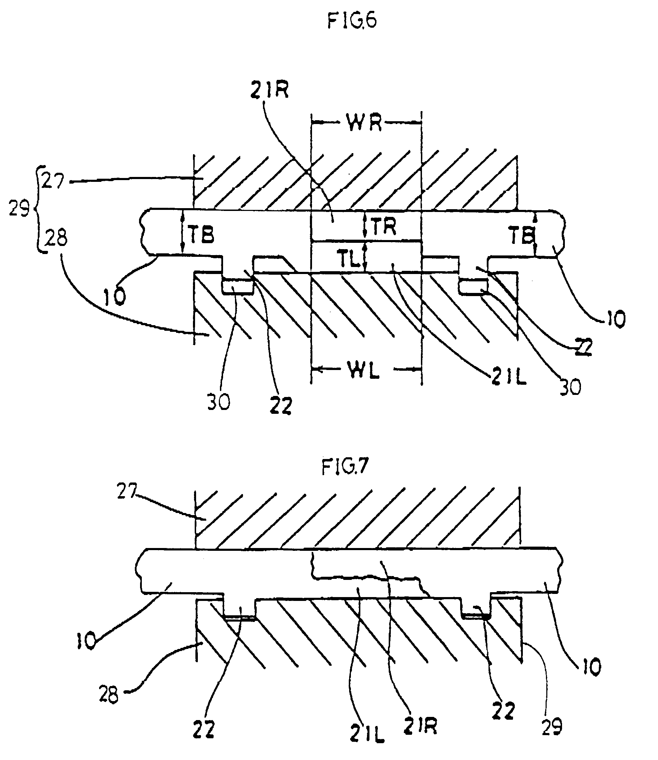

The junction piece 21R of the tyre piece 3R is formed level with the outer circumference of the extending piece 10 as shown in Figures 5 and 6 and its thickness TR is larger than half the thickness TB of the extending piece 10. The tyre axial direction width WR of the junction piece 21R is set at 5 to 20mm.

The junction piece 21L of the tyre piece 3L is similarly set so that its thickness TL is larger than half the thickness TB of the extending piece 10, and the tyre axial direction width WL is the same as the width WR of the junction piece 21R. The outer circumference of the junction piece 21L is positioned at the inner side of the tyre radial direction from the outer circumference of the extending piece 10.

The tyre base body 2 is formed by heat fusing the engaged junction pieces 21L,21R. The heat fusing, in this embodiment, is carried out by using a high frequency welder 29 having an upper pole 27 and a lower pole 28 as shown in Figures 5, 6 and 7. The lower pole 28 is provided with stop grooves 30 into which fit the projections 22 to prevent movement of the extending pieces 10 in the lateral direction. Alternative means for joining the junction pieces 21L,21R include electron beam heating and/or an adhesive or melting one or both outer edges of the extending pieces 10 by a heated plate in order to fuse to each other.

The radical outer face of the tread bottom part 15 formed by jointing each extending piece 10 is buffed to make the face rough and remove oil and dust in order to promote adhesion. The buffed face is coated with an adhesive. Various materials capable of joining high polymer materials during vulcanisation may be used as adhesives. For example, isocyanate vulcanisation adhesive and halogenated rubber vulcanisation adhesive are used, and are preferably applied in laminates.

On to the outer face of the tread bottom part 15, are successively superimposed a cushion rubber layer 11, a reinforcement layer 8 and a tread rubber 5, to form a raw cover tyre 1A.

The cushion rubber layer 11 is made of a rubber sheet of a relatively soft material, for5 example, hardness of about 20 to 40 degrees JIS A, and about 0.5 to 2mm thick. The cushion rubber layer 11 has the same width as that of the tread bottom part 15 so as to cover all over the outer surface thereof, and is applied in an unvulcanised condition.

The reinforcement layer 6 is composed of at least one ply 6a in this embodiment. The reinforcement ply 6a consists of at least one cord, for example, ten cords wound on to the tread bottom part 15 spirally and continuously from one edge to the other edge of the reinforcement ply to be formed at an angle of 0 to 5 degrees with respect to the circumferential direction of the tyre. Alternatively if the reinforcing cord is wound from the tyre equator to both edges, the pull phenomenon due to cord inclination can be prevented.

The reinforcing cords are coated with unvulcanised topping rubber, but when the cushion rubber layer 11 has a thickness of more than that of the topped reinforcing cord, then the reinforcing cord may be embedded in the cushion rubber layer 11 without the topping rubber. For the reinforcing cord, steel cord, aromatic polyamide, polyester, rayon, nylon and other organic fibre cord may be used. When steel cord is employed it is usually plated with brass.

By using a reinforcement ply 6a of spirally wound cord, the necessary hoop effect is maintained while decreasing the cord density, and thus excessive tread rigidity is prevented so that ride comfort is improved.

The reinforcement layer 6 is preferably set in a right circular cylindrical form centred on the tyre axis when the tyre is inflated to its schedule pressure. In this case disturbance of the spiral arrangement of the cord is prevented so uniformity is improved.

The tread rubber 5 is made of semi-vulcanised or vulcanised rubber sheet having a similar shape in the sectional plane to the finished tread shape in the properties similar to that of an ordinary. On the outer surface of the tread rubber 5, tread grooves G are formed or shaped prior to tyre moulding.

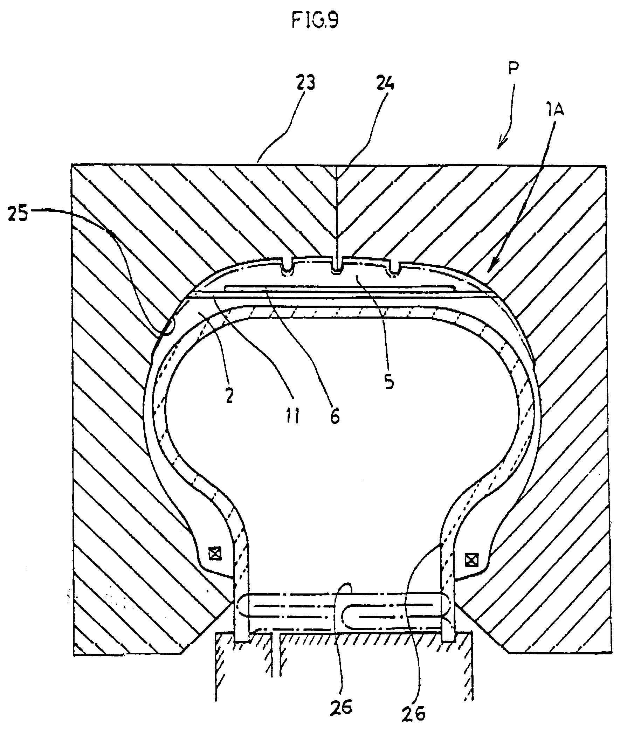

The raw cover tyre 1A is then put into a metal mould P as shown in Figure 9 and vulcanised.

The vulcanising metal Mould P comprises a fixed mould 23, a sliding mould 24 which fits to the fixed mould 23 to form a cavity 25 in a shape of tyre outer circumference, and a bladder 26 which is naturally folded inwards of the cavity 25. The bladder 26 inflates out as the steam is injected. and the inner space of the raw cover tyre 1A is pressurized by the bladder 26.

Accordingly, the raw cover tyre 1A is vulcanised with heat and pressure with the outer surfaces pressed into the cavity 25 by expansion of the bladder 26 to form a pneumatic tyre 1 wherein the tyre base body 2, the cushion rubber layer 11, the reinforcing layer 6 and the tread rubber 5 are intimately united as one body. Furthermore, since the tread grooves G have been previously formed in the tread rubber 5, the tread surface is subjected to even pressure during vulcanisation, so that deformation of the tyre base body 2 and uneven rubber gauge of tread 4 are prevented and the uniformity of the tyre is greatly improved.

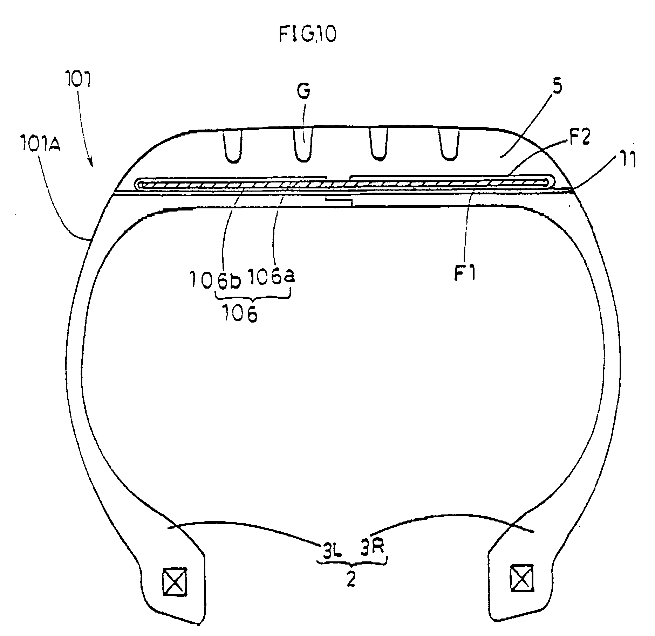

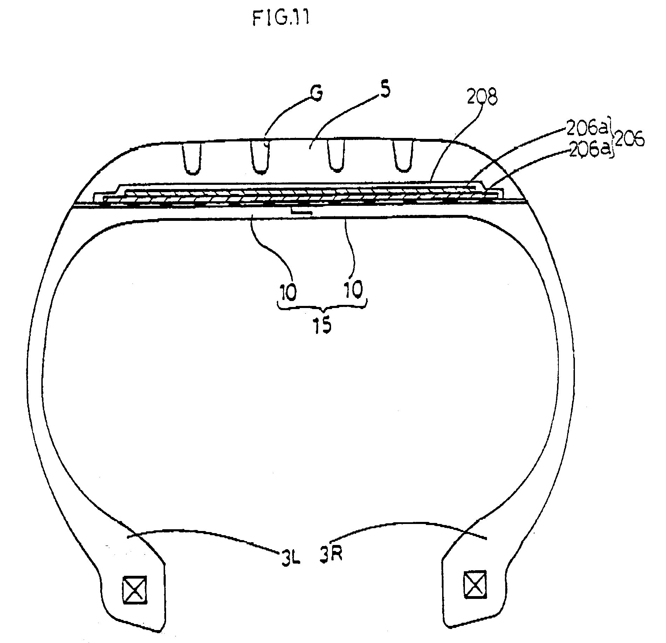

Figures 10 and 11 show the other embodiments of the present invention.

In Figures 10, the raw cover tyre 101A of the tyre 101 has a reinforcement layer 106 composed of a cut-edge reinforcement ply 106a and a folded edge reinforcement ply 106b. The cut-edge reinforcement ply 106a comprises reinforcing cords of steel fibres arranged at an angle of 10 to 30 degrees. In this embodiment, the angle is 18 degrees with respect to the tyre equator. The folded edge reinforcement ply 106b has a main portion F1 which is disposed under the cut-edge ply 106a and skirts F2 which are folded over onto the cut-edge ply 106a from the outer edge of the main portion F1 so as to wrap the cut edge of the cut-edge ply 106a. The folded edge ply 106b comprises reinforcing cords of organic fibres arranged so as to cross the cords of the cut-edge ply 106a, thereby a triangulated structure is constructed and tread rigidity is effectively provided. Furthermore, separation occurring at the edge of the reinforcement layer 106 is prevented by the wrapping of the cut edge of the steel fibre cords by the skirt F2.

In the embodiment, shown in Figure 11, a band layer 208 which is composed of at least one rubber coated nylon cord, for example ten cords, spirally and continuously wound in the circumferential direction is provided on the reinforcement layer 206 which is composed of at least one cut-edge reinforcement ply, for example two cut-edge reinforcement plies 206a so as to cover the outer surface of the reinforcement layer 206.

Thereby, when the cord density of the reinforcement layer 206 is kept low, the crown part of the tyre base body 2 is effectively restricted by this band layer 208. As a result, the lifting of the tyre base body 2 due to high-speed rotation is suppressed.

In this tyre 201, by using a band layer 208 restricting the tread bottom part 15, excessive increase in tread rigidity is prevented so that ride comfort is improved, and separation due to the rigidity difference is prevented. In this case, the band layer 208 is preferably set in a right circular cylindrical form centred on the tyre axis when the tyre is in an inflated state so as to prevent the disturbance of the spiral arrangement of the cord.

In order to prove the effectiveness of the invention prototypes of the tyre of size 185/70SR14 having the tyre structure shown in Figure 11 were fabricated according to the specification shown in Table 1 by the manufacturing method stated above, and the strength, durability, ride comfort, and steering stability of the tyre were tested. For the durability test, conforming to the JATMA conditions, tyres were inflated to the specified internal pressure and loaded to specified load and then run on a drum at a standard speed for 30,000km. Also a high speed durability test was conducted by running the tyre for 20 minutes at a speed of 170km/h according to the conditions of test B of JATMA. Ride comfort and steering stability were evaluated by running the tyres on a car, and recording the driver's observations.

**Table 1**

| | |
|---|---|
| tire base body | polyester elastomer |
| reinforcement layer | 2 plies |
| cord | steel 1 x 5/0.25 |
| cord angle | 18 deg. cross |
| band layer | nylon 1260 d/2 |
| cord twist | 35 x 35 T/10cm |
| cord angle | 0 deg. |
| tread rubber | 100 SBR |
| tire strength | 4780 kgf-cm or more |
| durability | no damage |
| high speed durability | no damage |
| riding feeling | satisfactory |
| steering stability | satisfactory |

## Claims

1. A pneumatic tyre formed in a metal vulcanising mould (P) by vulcanising a raw cover tyre which comprises a toroidal tyre base body (2) injection-formed of high polymer material and having a pair of bead parts (7) each with a bead core (19), sidewall parts (9) each extending outwardly in the radial direction of the tyre from said bead parts and a tread bottom part (15) disposed between outer ends of said sidewall parts (9) for forming a tread part of a tyre, an unvulcanised cushion rubber layer (11) having a JIS A hardness of 20 to 40 degrees arranged on said tread bottom part (15), a reinforcement layer (6,106,206) of reinforcing cords arranged on said cushion rubber layer (11), and a tread rubber (5) made of vulcanised or semi-vulcanised rubber characterised in that the tyre base body (2) comprises a pair of semi-annular tyre pieces (3L,3R) having one bead part (7) in which the bead core (19) is buried, one sidewall part (9) contiguous to the bead part (7), and an extending piece (10) contiguous to the sidewall part (9) for forming the tread bottom part (15) by mutually joining and the tread rubber (5) has tread grooves (G) on its outer surface and is arranged on said reinforcement layer(6,106,206).

2. A pneumatic tyre according to claim 1, characterised in that the reinforcement layer (6) is composed of at least one reinforcement ply (6a) comprising a single or plural reinforcing cord spirally and continuously wound in the tyre circumferential direction.

3. A pneumatic tyre according to claim 1, characterised in that the reinforcement layer is composed of a cut-edge reinforcement ply (106a) comprising reinforcing cords of steel fibres and a folded edge reinforcement ply (106b) comprising reinforcing cords of organic fibres, and said folded edge reinforcement ply (106b) has a main portion (F1) disposed under the cut-edge reinforcement ply (106a) and skirts (F2) folded over onto said cut- edge reinforcement ply (106a) from both outer ends of said main portion (F1) so as to wrap each cut- edge of said cut-edge reinforcement ply (106a).

4. A pneumatic tyre according to claim 1, characterized in that the reinforcement layer (206) is composed of at least one cut-edge reinforcement ply (206), and a band layer (208) of nylon cord wound spirally and continuously in the tyre circumferential direction is provided on said reinforcement layer (206).

5. A pneumatic tyre according to any of claims 1 to 4 characterised in that the cushion rubber layer (11) has a thickness of 0.5 to 2mm.

6. A pneumatic tyre according to any of claims 1 to 5 characterised in that the cushion rubber layer (11) has the same width as the tread bottom part (15).

7. A pneumatic tyre according to any of claims 1 to 6 characterised in that the radial outer face of the tread bottom part (15) is buffed to make the face rough and the cushion rubber layer (11) is provided on the buffed face.

## Patentansprüche

1. Ein Luftreifen, der in einer metallischen Vulkanisationsform (P) durch Vulkanisierung eines Rohdeckenreifens gebildet wird, der aufweist einen torodialen Reifengrundkörper (2), der aus einem hochpolymeren Material durch Spritzguß hergestellt ist und ein Paar von Wulstteilen (7) jeweils mit einem Wulstkern (19), Seitenwandungsteile (9), die sich jeweils in der Radialrichtung des Reifens von den Wulstteilen nach außen erstrecken, und ein Laufflächenbodenteil (15), das zwischen äußeren Enden der Seitenwandungsteile (9) zur Bildung eines Laufflächenteils eines Reifens angeordnet ist, hat, eine nicht vulkanisierte Kissengummischicht (11) mit einer JIS A-Härte von 20 bis 40 Grad, die auf dem Laufflächenbodenteil (15) angeordnet ist, eine Verstärkungsschicht (6, 106, 206) aus Verstärkungscorden, die auf der Kissengummischicht angeordnet ist, und einen Laufstreifen (5), der aus vulkanisiertem oder halbvulkanisiertem Gummi hergestellt ist,
dadurch **gekennzeichnet,**
daß der Reifengrundkörper (2) ein Paar von halbringförmigen Reifenteilen (3L, 3R) mit einem Wulstteil (7), in dem der Wulstkern (19) eingeschlossen ist, einem Seitenwandungsteil (9), das sich an den Wulstteil (7) anschließt, und einem sich dehnenden Teil (10), das sich an das Seitenwandungsteil (9) anschließt, um das Laufflächenbodenteil (15) durch gegenseitige Verbindung zu bilden, besitzt, und daß der Laufstreifen (5) Laufflächenrillen (G) an seiner Außenfläche hat und auf der Verstärkungsschicht (6, 106, 206) angeordnet ist.

2. Ein Luftreifen nach Anspruch 1,
dadurch **gekennzeichnet,**
daß die Verstärkungsschicht (6) aus mindestens einer Verstärkungseinlage (6a) mit einem einzigen oder einer Mehrzahl von Verstärkungscorden besteht, der oder die spiralförmig und kontinuierlich in der Reifenumfangsrichtung gewickelt ist bzw. sind.

3. Ein Luftreifen nach Anspruch 1,
dadurch **gekennzeichnet,**
daß die Verstärkungsschicht aus einer Verstärkungseinlage (106a) mit abgeschnittenen Kanten, die Verstärkungscorde aus Stahlfasern besitzt, und einer Verstärkungseinlage (106b) mit gefalteten Kanten, die Verstärkungscorde aus organischen Fasern besitzt, besteht, und daß die Verstärkungseinlage (106b) mit gefalteten Kanten einen Hauptbereich (F1), der unterhalb der Verstärkungseinlage (106a) mit geschnittenen Kanten angeordnet ist, und Einfassungen (F2), die auf die Verstärkungseinlage (106a) mit geschnittenen Kanten von beiden äußeren Enden des Hauptbereichs (F1) umgeschlagen sind, um jede abgeschnittene Kante der Verstärkungseinlage (106a) mit abgeschnittenen Kanten einzuwickeln, aufweist.

4. Ein Luftreifen nach Anspruch 1,
dadurch **gekennzeichnet,**
daß die Verstärkungsschicht (206) aus mindestens einer Verstärkungseinlage (206a) mit abgeschnittenen Kanten besteht und daß eine Bandschicht (208) aus Nyloncord spiralförmig und kontinuierlich in der Reifenumfangsrichtung auf der Verstärkungsschicht 206 vorgesehen ist.

5. Ein Luftreifen nach einem der Ansprüche 1 bis 4,
dadurch **gekennzeichnet,**
daß die Kissengummischicht (11) eine Dicke von 0,5 bis 2 mm hat.

6. Ein Luftreifen nach irgendeinem der Ansprüche 1 bis 5,
dadurch **gekennzeichnet,**
daß die Kissengummischicht (11) dieselbe Breite wie das Laufflächenbodenteil (15) hat.

7. Ein Luftreifen nach irgendeinem der Ansprüche 1 bis 6,
dadurch **gekennzeichnet,**
daß die radial äußere Fläche des Laufflächenbodenteils (15) aufgerauht ist, um die Fläche rauh zu machen, und daß die Kissengummischicht (11) auf der aufgerauhten Fläche vorgesehen ist.

## Revendications

1. Pneumatique formé dans un moule métallique (P) de vulcanisation par vulcanisation de caoutchouc brut de revêtement de pneumatique, qui comprend un corps toroïdal (2) de base de pneumatique formé par injection d'une matière contenant un haut polymère et ayant deux parties de talon (7) ayant chacune une tringle (19), des parties (9) de flanc disposées chacune vers l'extérieur dans la direction radiale du pneumatique depuis les parties de talon, et une partie inférieure (15) de bande de roulement placée entre les extrémités externes des parties (9) de flanc pour la formation d'une partie de bande de roulement d'un pneumatique, une couche non vulcanisée (11) de caoutchouc d'amortissement ayant une dureté JIS A de 20 à 40°, placée sur la partie inférieure (15) de bande de roulement, une couche d'armature (6, 106, 206) formée de câblés d'armature placés sur la couche (11) de caoutchouc d'amortissement, et un caoutchouc (5) de bande de roulement formé d'un caoutchouc vulcanisé ou semi-vulcanisé, caractérisé en ce que le corps (2) de base du pneumatique comprend deux pièces semi-annulaires (3L, 3R) de pneumatique ayant une partie de talon (7) dans laquelle est enrobée la tringle (19), une partie de flanc (9) contiguë à la partie de talon (7), et une pièce (10) de prolongement contiguë à la partie de flanc (9) et destinée à former la partie inférieure (15) de bande de roulement par raccordement des pièces, et le caoutchouc (5) de la bande de roulement a des gorges (G) à sa surface externe et est disposé sur la couche d'armature (6, 106, 206).

2. Pneumatique selon la revendication 1, caractérisé en ce que la couche d'armature (6) est composée d'au moins une nappe d'armature (6a) comprenant un ou plusieurs câblés d'armature enroulés en spirale et de façon continue dans la direction circonférentielle du pneumatique.

3. Pneumatique selon la revendication 1, caractérisé en ce que la couche d'armature est composée d'une nappe (106a) d'armature à bords coupés comprenant des câblés d'armature formés de fibres d'acier et une nappe (106b) d'armature à bords pliés comprenant des câblés d'armature de fibres organiques, et la nappe (106b) d'armature à bords pliés a une partie principale (F1) disposée sous la nappe (106a) d'armature à bords coupés et des jupes (F2) repliées sur la nappe (106a) d'armature à bords coupés depuis les extrémités externes de la partie principale (F1) afin qu'elles enveloppent chaque bord coupé de la nappe (106a) d'armature à bords coupés.

4. Pneumatique selon la revendication 1, caractérisé en ce que la couche d'armature (206) est composée d'au moins une nappe (206) d'armature à bords coupés et d'une couche en bande (208) d'un câblé de "Nylon" enroulée en spirale et de façon continue dans la direction circonférentielle du pneumatique et disposée sur la couche d'armature (206).

5. Pneumatique selon l'une des revendications 1 à 4, caractérisé en ce que la couche (11) de caoutchouc d'amortissement a une épaisseur comprise entre 0,5 et 2 mm.

6. Pneumatique selon l'une quelconque des revendications 1 à 5, caractérisé en ce que la couche (11) de caoutchouc d'amortissement a la même largeur que la partie inférieure (15) de bande de roulement.

7. Pneumatique selon l'une des revendications 1 à 6, caractérisé en ce que la face externe radiale de la partie inférieure (15) de bande de roulement est traitée en surface afin qu'elle soit rugueuse et la couche (11) de caoutchouc d'amortissement est disposée sur cette face traitée.
